# EUROPEAN PATENT APPLICATION

(11) **EP 4 506 211 A1**
(43) Date of publication of application: **12.02.2025**
(21) Application number: 24193081.7
(22) Date of filing: 06.08.2024
(51) Int. Cl.: B60P 7/08, B60R 7/00

(54) **LOAD SUPPORTING ASSEMBLY**

(30) Priority: 08.08.2023 GB 202312140
(71) Applicant: Rabaiotti, Mario, Hakin Milford Haven SA73 3BU (GB)
(72) Inventor: Rabaiotti, Mario, Hakin Milford Haven SA73 3BU (GB)
(74) Representative: Murgitroyd & Company

(57) **Abstract**

A load supporting assembly for supporting a load in a motorhome. The load supporting assembly comprises a plurality of support formations, each for fixing to corresponding fixing locations on a motorhome surface. The load supporting assembly further comprises a flexible webbing for support by the plurality of support formations such that in a supported configuration the flexible webbing is suspended from the plurality of support formations. The flexible webbing defines a load carrying region comprising a load carrying loop for passing under and around the sides of the load to effectively encapsulate the load. The flexible webbing further comprises a mounting region arranged to be suspended from the plurality of support formations, where the load carrying region is supported by the mounting region. The flexible webbing is folded to define the load carrying loop and the mounting region.

## Description

### FIELD

The present specification relates to supporting loads within motor vehicles, and particularly relates to supporting loads within motorhomes.

### BACKGROUND

Supporting loads within motorhomes has several associated challenges. The environment is a moving one, requiring the secure support of the load in multiple axes. Storage is rarely long term, with the stored items largely being essential and thus requiring frequent access. Internal spaces often require reconfiguration between parked and driving configurations, where a parked configuration may require more access to the internal space and thus removal of any storage assemblies that prevent access to said internal space. Space is at a premium within the motorhome, requiring compact storage solutions with minimal intrusion into the internal spaces. Finally, due to the flexible nature of motorhome use, there is a requirement to accommodate differing and bulky loads that conventional storage (e.g. chest of drawers) would be unable to store.

Existing solutions address this by the provision of mounting points that attach to separate walls of the motorhome or are spaced over the interior of its roof. Mounted to these points is an open hammock-like carrier that enables vertical support of the load over a large horizontal distance. These solutions are usually mounted in upper regions of the motorhome to reduce intrusion into any internal space that would require access. Further, by spanning the width of the motorhome or by forming boundaries around the periphery of the carrier, the load is partially constrained but is still free to slide in the hammock between the boundaries/walls of the motorhome.

The problem with these solutions is that the mounting points require permanent fixation to the motorhome, necessitating drilling into the motorhome body and/or roof. This can potentially lead to structural damage of the motorhome body, particularly when mounts are installed by inexperienced users. Further, the permanent nature of the mounts makes reconfiguration of the carrier to support differently sized loads challenging, requiring extensive time and fixation equipment to reaffix the mounts.

Further, the installation of these solutions in upper regions of the motorhome make access more challenging, particularly for less-abled users. The open hammock-like nature of the carrier means that loads are essentially balanced on the carrier and as such are not encapsulated/laterally constrained. This can lead to notable movement of the load within the carrier when operating the motorhome and can lead to a load being flung from the carrier.

Aspects of the present invention aim to address the above-mentioned problems, or at least provide a useful alternative.

### SUMMARY

Aspects of the present disclosure are set out in the accompanying independent and dependent claims. Combinations of features from the dependent claims may be combined with features of the independent claims as appropriate and not merely as explicitly set out in the claims.

According to an aspect of the present disclosure, there is provided a load supporting assembly for supporting a load in a motorhome, the load supporting assembly comprising a plurality of support formations, each for fixing to corresponding fixing locations on a motorhome surface; and a flexible webbing for support by the plurality of support formations such that in a supported configuration the flexible webbing is suspended from the plurality of support formations, where the flexible webbing defines a load carrying region, the load carrying region comprising a load carrying loop.

It will be appreciated that the term loop is used in accordance with its normal English meaning, being a structure the end of which is connected to its beginning. As such an unconnected load carrying region (for example a hammock) would not be considered a loop. It will be appreciated that the load carrying loop passes under and around the sides of a load to encapsulate said load. The combination of the supports and loop enable selective formation of the load carrying region within a motorhome. This results in better securement of the load (in that is at least partially restrained around its circumference) when compared to conventional solutions. The flexible webbing is inherently both capable of being supported and supporting a load. It will be appreciated that the flexible webbing could be a formed from a mesh, netting, or any other flexible material. One example of a flexible webbing is "webbing" in accordance with its normal English meaning, being a strong closely woven material. The woven nature of webbing allows it to carry heavy loads and also to accommodate localised damage (e.g. punctures in the webbing) without the entirety of the webbing failing/limiting the propagation of the damage. It will be appreciated that suspension of the flexible webbing could be direct or indirect (i.e. via another feature such as a pole). The plurality of fixing locations are beneficially spaced apart. The configuration of the load supporting assembly means that just first and second support formations are required. Each of the support formations are beneficially independently fixed to the motorhome surface.

The plurality of supports may each comprise adhesive for adhering to a corresponding fixing location on a motorhome surface.

It will be appreciated that adhesive beneficially replaces the need for drilling or permanent mounting of the supports to a motorhome. Further, it will be appreciated that the adhesive could be one time use, or could be re-usable such that the plurality of supports may be repeatedly mounted to a motorhome wall using the adhesive.

According to another aspect of the present disclosure, there is provided a load supporting assembly for supporting a load in a motorhome, the load supporting assembly comprising: a plurality of support formations, each comprising adhesive for adhering each of the support formations to a motorhome surface; and a flexible webbing for support by the plurality of support formations such that in a support configuration the flexible webbing is suspended from the plurality of support formations and defines a load carrying region.

The adhesive enables the load carrying region to be formed at any location within the motorhome without requiring permanent mounting to any motorhome surface.

The load carrying region may comprise or be defined as a load carrying loop.

The load carrying loop may be defined as a channel for receipt of the load, the channel having a longitudinal axis being loadable in a loading direction parallel to the longitudinal axis.

The flexible webbing may be arranged to releasably mount to the plurality of support formations.

By releasably mounting to flexible webbing to the support formations it is possible to remove the webbing from the supports and locate it in a more open area to ease access to the load carried within.

The flexible webbing preferably comprises a mounting region arranged to be suspended from the plurality of support formations, the load carrying region being supported by the mounting region. The mounting region may be made of the same webbing material as the load carrying loop, may comprise a combination of the material of the load carrying loop and another material, or may comprise another material in entirety with the load carrying loop suspended therefrom.

The flexible webbing may be folded to define the load carrying loop and the mounting region.

The mounting region may comprise a first and second overlapping portion of the flexible webbing, the first and second overlapping portions being secured together.

By having two portions, which overlap one another, the strength of the mounting region is increased. This increases the capacity for the flexible webbing to transfer load to the supports, and as such the loading capacity of the flexible webbing as a whole.

The first and second overlapping portions may define a channel therethrough for receipt of a support pole, the load supporting assembly further comprising a support pole, wherein the support pole and support formations are configured such that the support pole can be suspended from the plurality of support formations.

The channel enables receipt of a support pole for distributing load from the webbing to the plurality of supports in a manner that spreads the load across the flexible webbing, as such reducing localised stress concentrations. The support pole preferably protrudes from a first and a second opposing end of the channel for support by respective spaced apart support formations. The support pole is preferably aligned with the longitudinal axis of the channel.

The flexible webbing may comprise a thermoplastic material

The thermoplastic is beneficially polyester or polyamide. Polyesters can readily be blended or coated with other materials to convey beneficial or tailored properties to a device. Polyamides have low co-efficient of friction that can reduce the risk of damage to any component retained in the webbing, and when directly compared to polyester, polyamide has a slightly lower density whilst retaining an equivalent strength. Further, both polyamide and polyester are durable and lightweight, and provide an excellent strength-weight ratio comparable to that of commercial metallic compounds (e.g. SS 304).

The plurality of support formations may comprise a plurality of hooks. It will be appreciated that hooks enable releasable mounting in a secure and cost-effective manner. Such hooks can receive eyelets, or can also receive a support pole if utilised.

The flexible webbing may comprise eyelets arranged to engage with the support formations.

By implementing eyelets, stress concentrations from the supports are spread in a larger area, preventing localised damage to the webbing. Further, the eyelets eliminate any frictional or "rubbing" induced damage to the webbing when it is mounted to the plurality of supports. The eyelets may be provided in the mounting region.

The eyelets are preferably spaced apart.

The eyelets are beneficially spaced apart longitudinally across the flexible webbing, in that they are spaced apart in a direction aligned with the longitudinal axis of the channel. Longitudinally spacing the eyelets enables better load distribution into the flexible webbing, and as such any load is better supported by the flexible webbing.

### BRIEF DESCRIPTION OF THE DRAWINGS

Embodiments of this disclosure will be described hereinafter, by way of example only, with reference to the accompanying drawings in which like reference signs relate to like elements and in which:
Figure 1a shows schematic perspective representations of a load supporting assembly for supporting a load in a motorhome according to an embodiment of this disclosure;
Figure 1b shows a schematic perspective representation of a flexible webbing for supporting a load within a motorhome, according to an embodiment of this disclosure;
Figure 1c shows a schematic perspective representation of a load supporting assembly supporting a load for use in a motorhome, according to an embodiment of this disclosure;
Figure 2a shows a schematic perspective representation of load supporting assembly for supporting a load in a motorhome, according to a second embodiment of this disclosure;
Figure 2b shows a schematic perspective representation of a flexible webbing for supporting a load within a motorhome according to a second embodiment of this disclosure;
Figure 3 shows a schematic perspective representation of a load supporting assembly for supporting a load within a motorhome according to a third embodiment of this disclosure.

### DETAILED DESCRIPTION

Embodiments of this disclosure are described in the following with reference to the accompanying drawings.

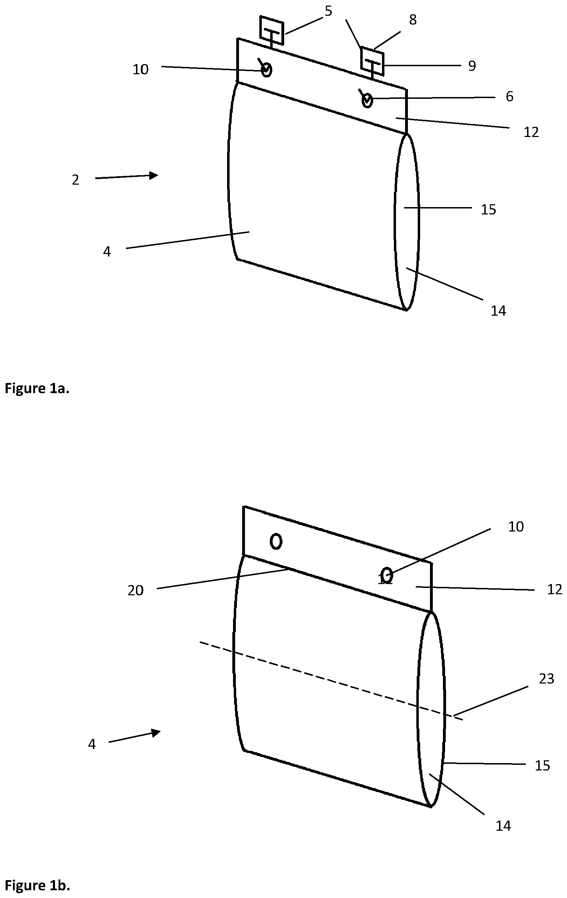

Figure 1a presents a load supporting assembly 2 according to an illustrative embodiment comprising a flexible webbing 4 supported by two support formations 5 in the form of hooks 6, mounting portions 8 and adhesive 9, the hooks 6 being attached to the mounting portions 8 and the mounting portions 8 being fixable to a surface such as a motorhome wall by adhesive 9. The supports can be positioned at the desired location in the motorhome to accommodate preinstalled furniture and/or the specific geometry of that particular vehicle. The flexible webbing comprises eyelets 10 arranged for accommodating the hooks 6 meaning the flexible webbing 4 is releasably mountable to the hooks 6. The eyelets 10 may for example be crimped into an upper mounting region 12 of the flexible webbing 4 enabling direct mounting of the flexible webbing 4 to the hooks 6. Supported by the mounting region 12 is a load carrying region 14 provided by a load carrying loop 15 of the flexible webbing 4.

Figure 1b presents the flexible webbing 4 as shown in Figure 1a without the plurality of support formations 5 for clarity purposes. The flexible webbing 4 is manufactured from a folded rectangular sheet of polyester webbing defined between a first end and an opposing second end. The rectangular sheet is folded, overlapped and joined to form the mounting region 12. One or more seams 20 can be sewn joining first and second end regions of the sheet. The seam 20 shown in Figure 1b defines a boundary of both a load carrying loop 15 - where the resultant channel of the load carrying loop 15 is defined along a longitudinal axis 23 - and the mounting region 12; with the mounting region 12 defined between the ends of the sheet and the seam 20. Eyelets 10 are crimped through mounting region 12 and pass through both portions of the webbing. It should be noted that the mounting region 12 could comprise a single region of flexible webbing 4 with the second end terminating at the seam 20. It will also be appreciated that the mounting region 12 may comprise a different material to the flexible webbing, and the mounting region may be secured to the flexible webbing 4 at the seam 20. In such an embodiment the mounting region 12 may be made of a material more rigid than the flexible webbing 4.

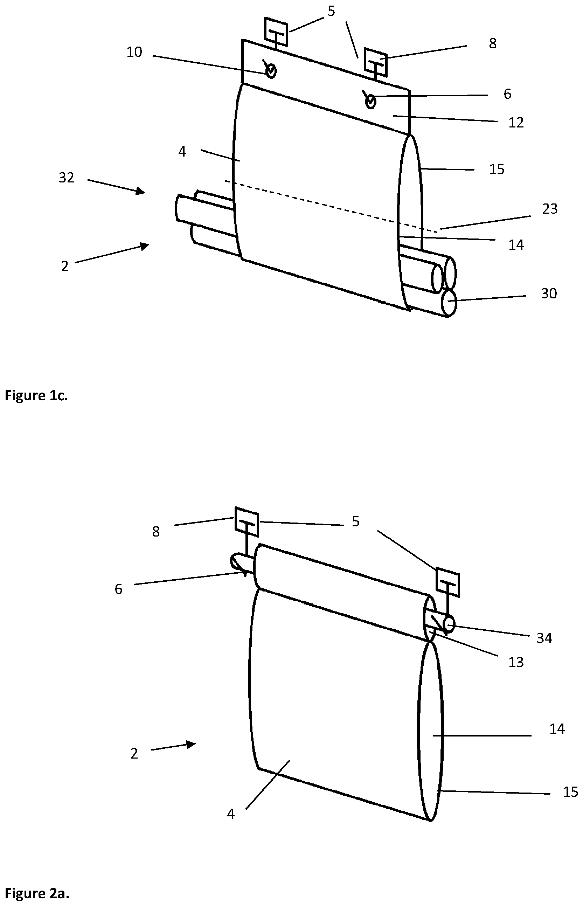

Figure 1c presents the load supporting assembly 2 with the load carrying loop 15 supporting a load 30. The load 30 is loaded into the load carrying loop 15 in a loading direction 32 that is parallel to the longitudinal axis 23 of the channel of the load carrying loop 15. By spacing the supports apart horizontally, gravity causes the load 30 to be loaded perpendicularly to the longitudinal axis 23 of the channel of the load carrying loop 15. The flexible nature of the webbing 4 combined with the formation of the load carrying loop 15 means loads of varying shapes can be readily accommodated, as well as the webbing 4 being able to accommodate the shape of the surrounding area in the motorhome.

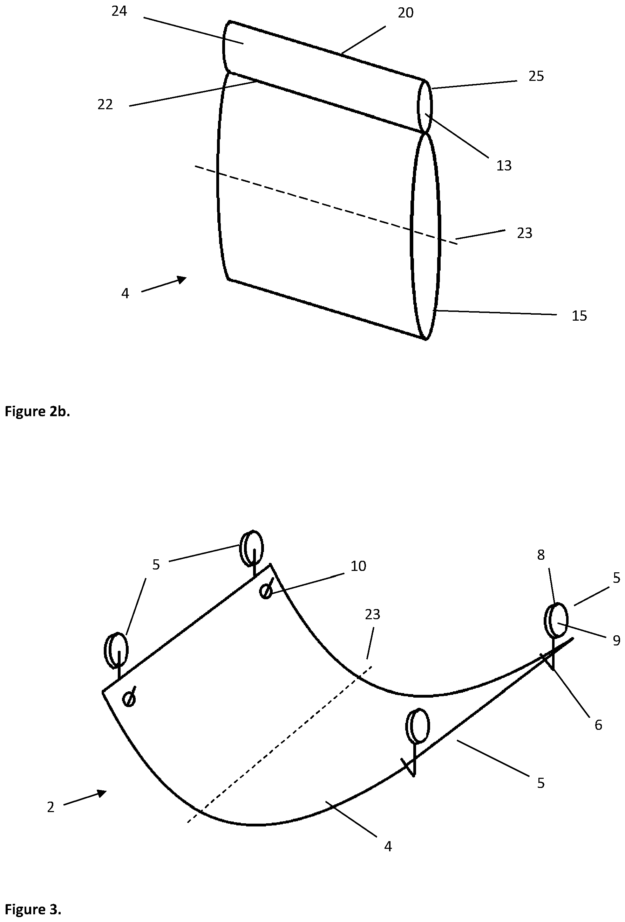

Figures 2a and 2b respectively present a load supporting assembly 2 and a flexible webbing 4 for use with a load supporting assembly 2 according to another illustrative embodiment, where the load supporting assembly 2 and flexible webbing 4 have the same features with the following exceptions. As with the former embodiment the flexible webbing 4 is formed from a rectangular sheet of webbing where the sheet is folded; however, a first seam 20 is instead sewn to join the two ends of the sheet, forming a single loop. A second seam 22, parallel and separate from the first seam 20, is also sewn, forming the mounting region 12 and the load carrying loop 15; where a channel 13 is formed between the first 20 and second 22 seams that can accommodate a support pole 34. The channel 13 and support pole 34 replaces the functionality of the eyelets 10 of the former embodiment. To enable mounting of the flexible webbing 4, in lieu of the eyelets 10, the support pole 34 is inserted through the channel 13 such that a portion of the support pole 34 protrudes from both sides of the channel 13. Each of the protruding portions of the support pole 34 are respectively supported by one of the hooks 6. Thus, the flexible webbing 4 is indirectly mounted to the hooks 6 via the pole 34, and the support pole 34 suspends the flexible webbing 4 and therefore load therefrom. An advantage of such a configuration is that the flexible webbing 4 is supported along its entire longitudinal length providing increased structural integrity to the flexible webbing in the longitudinal axis.

Figure 3 presents a load supporting assembly 2 according to a third illustrative embodiment. The load supporting assembly 2 comprises a flexible webbing 4 formed of a single rectangular sheet of material, where the flexible webbing 4 comprises four eyelets 10; each eyelet 10 located at a different corner of the rectangular sheet. The load supporting assembly 2 further comprises four support formations 5, each support formation comprising a hook 6 attached to the front of a mounting portion 8, where adhesive 9 is applied to the rear of each mounting portion 8. These supports can be independently positioned within a motorhome and adhered to a surface of the motorhome using the adhesive 9. Each eyelet 10 may be received by one of the hooks 6, and the flexible webbing 4 is supported to define a load carrying region 14 in the form of a load carrying channel. It will further be appreciated that multiple eyelets 10 can be mounted to the same support formation 5 as required thereby providing flexibility to the user regarding the specific geometry of the vehicle or specific geometry of the load. The user can therefore position a support formation as required for the specific motorhome or can adhere multiple different support formations and suspend the flexible webbing in the location most appropriate to the load.

Although particular embodiments of this disclosure have been described, it will be appreciated that many modifications/additions and/or substitutions may be made within the scope of the claims.

## Claims

1. A load supporting assembly for supporting a load in a motorhome, the load supporting assembly comprising:
a plurality of support formations, each for fixing to corresponding fixing locations on a motorhome surface; and
a flexible webbing for support by the plurality of support formations such that in a supported configuration the flexible webbing is suspended from the plurality of support formations, where the flexible webbing defines a load carrying region, the load carrying region comprising a load carrying loop for passing under and around the sides of the load to effectively encapsulate the load; wherein
the flexible webbing comprises a mounting region arranged to be suspended from the plurality of support formations, the load carrying region being supported by the mounting region; and
the flexible webbing is folded to define the load carrying loop and the mounting region.

2. A load supporting assembly according to claim 1, wherein the plurality of support formations each comprise adhesive for adhering to a corresponding fixing location on a motorhome surface.

3. A load supporting assembly according to claim 1 or 2, wherein the load carrying loop is defined as a channel for receipt of the load, the channel having a longitudinal axis and being loadable in a loading direction parallel to the longitudinal axis.

4. A load supporting assembly according to any preceding claim, where the flexible webbing is arranged to releasably mount to the plurality of support formations.

5. A load supporting assembly according to claim 1, where the mounting region comprises a first and second overlapping portion of the flexible webbing, the first and second overlapping portions being secured together.

6. A load supporting assembly according to claim 7, wherein the first and second overlapping portions define a channel therethrough for receipt of a support pole, the load supporting assembly further comprising a support pole, wherein the support pole and support formations are configured such that the support pole can be suspended from the plurality of support formations.

7. A load supporting assembly according to claim 8 wherein the support pole protrudes from a first and a second opposing end of the channel.

8. A load supporting assembly according to any preceding claim, wherein the flexible webbing comprises thermoplastic.

9. A load supporting assembly according to any preceding claim, wherein the plurality of support formations each comprise a plurality hook.

10. A load supporting assembly according to any preceding claim, wherein the flexible webbing comprises eyelets for engagement with the support formations.

11. A load supporting assembly according to claim 10, wherein the eyelets are spaced apart.
